# FASCICULE DE BREVET EUROPEEN

(11) **EP 4 072 945 B1**
(45) Date de publication et mention de la délivrance du brevet: **18.10.2023**
(21) Numéro de dépôt: 21769775.4
(22) Date de dépôt: 23.08.2021
(51) Int. Cl.: B64G 1/22, B64G 1/44, H02S 20/30, E04H 12/18, H02S 30/20

(54) **MÂT TÉLESCOPIQUE SPATIAL**
TELESKOPISCHER RAUMMAST
TELESCOPIC SPACE MAST

(30) Priorité: 04.09.2020 FR 2009001
(43) Date de publication de la demande: 19.10.2022
(73) Titulaire: Airbus Defence and Space SAS, 31402 Toulouse Cedex 4 (FR); COMAT, 31130 Flourens (FR)
(72) Inventeur: PUPILLE, Gilles, 31402 Toulouse cedex 4 (FR); MORAINE, Adrien, 31402 Toulouse cedex 4 (FR); PIRES, Victor, 31402 Toulouse cedex 4 (FR)
(74) Mandataire: Ipside
(86) Numéro de dépôt international: PCT/FR2021/051477
(87) Numéro de publication internationale: WO 2022/049332

(56) Documents cités:
- CN-A- 110 884 690
- FR-A1- 2 477 204
- US-A1- 2007 028 532
- US-A1- 2014 318 040
- US-A1- 2017 183 888
- US-B1- 7 574 832
- US-B1- 10 119 292

## Description

### Domaine technique

L'invention appartient au domaine des systèmes spatiaux.

Plus particulièrement, l'invention appartient au domaine du déploiement linéaire d'équipements spatiaux. L'invention trouve une application particulière dans le déploiement de panneaux solaires souples, de déflecteurs, de miroirs pour instruments optiques ou encore de réflecteurs d'antennes.

### Technique antérieure

Des solutions de déploiement linéaire d'éléments flexibles sont connues de l'art antérieur.

Le brevet européen EP 2 108 586 divulgue un mât télescopique composé de segments cylindriques coaxiaux, d'un mécanisme motorisé de déploiement axial, et d'un ensemble de dispositifs de blocage axial et de verrouillage automatique disposés à la jonction entre deux segments.

La demande de brevet américain US 2019/0071191 divulgue un système de déploiement de membranes flexibles, telles que celles d'une voile solaire flexible, déployées grâce à une colonne centrale et pouvant inclure une structure en treillis.

Le document US 2014/318040 décrit une tour portable à multiples sections coaxiales, comprenant une section de base et au moins deux sections coulissantes, formant une structure télescopique imbriquée. Le document US 2017/183888 divulgue une structure télescopique pour la solidarisation et désolidarisation séquentielle de chaque segment.

Le document US 10 119 292 décrit une structure de flèche déployable pouvant passer d'un état replié / non déployé à un état non replié / déployé.

### Exposé de l'invention

La présente invention propose une alternative aux systèmes connus de l'art antérieur permettant de fournir un mât télescopique présentant à la fois une grande compacité en position repliée et fournissant, lors du déploiement, un effort adapté notamment au déploiement d'une voile solaire.

L'invention concerne un mât télescopique comprenant :
- des segments coaxiaux pouvant être commandés d'une position repliée en une position déployée,
- un ensemble de systèmes de guidage disposés entre les segments adjacents,
- un ensemble de systèmes de synchronisation des segments lors du déploiement et
- un système d'entraînement des segments de la position repliée vers la position déployée.

Selon l'invention, chaque segment est composé d'un même nombre déterminé de cornières solidarisées entre elles et s'étendant selon toute la longueur dudit segment, ledit nombre de cornières étant d'au moins trois, chaque segment présentant une section transversale formant un polygone dont les cornières occupent les sommets, chaque cornière comprenant une partie centrale plane bordée par deux ailes latérales, les cornières de deux segments adjacents venant en vis-à-vis l'une de l'autre, chaque système de guidage disposé entre deux segments adjacents étant fixé sur une des cornières d'un desdits deux segments adjacents et comprenant des galets roulant sur la portion centrale de la cornière en vis-à-vis appartenant à l'autre desdits deux segments adjacents. Le système de synchronisation comporte des systèmes d'engagement et des systèmes de séquencement chacun positionnés sur une cornière de façon à assurer un nouvel entrainement d'un des segments puis une libération de ce segment précédemment immobilisé, chaque segment situé entre le segment fixe et le segment d'extrémité, comprenant au moins un système d'engagement et un système de séquencement fixés sur une de ses cornières, le segment d'extrémité portant un système d'engagement et le segment fixe portant un système de séquencement, le système d'engagement d'un premier segment coopérant avec le système de séquencement fixé sur la cornière en vis-à-vis d'un deuxième segment adjacent, le système de séquencement du deuxième segment coopérant avec le système de séquencement fixé sur la cornière en vis-à-vis d'un troisième segment adjacent, l'avance de chaque segment induisant au moins la solidarisation d'un des systèmes d'engagement avec un des systèmes de séquencement et induisant au moins la désolidarisation de deux des systèmes de séquencement.

Dans un mode de réalisation, dans chaque segment, les cornières comprennent chacune un profil à trois pans en fibres tissées formant la partie centrale et les ailes, les ailes voisines, d'une cornière à l'autre, étant disposées dans un même plan, les cornières étant solidarisées entre elles par des éléments de solidarisation en fibres plaqués sur les profils à trois pans, les cornières et les éléments de solidarisation étant réalisés d'une seule pièce, par durcissement des fibres.

Dans un mode de réalisation, les cornières sont solidarisées entre elles par au moins deux bobinages par cornières, lesdits deux bobinages s'enroulant respectivement en sens horaire et en sens antihoraire autour des cornières et démarrant en deux extrémités opposées de chaque cornière, lesdits deux bobinages s'étendant sur toute la longueur du segment, les plis des bobinages multi-plis étant entrelacés au niveau de points de jonction des bobinages.

Dans un mode de réalisation, le nombre de cornières par segment étant égal à trois, chaque système de guidage, entre deux segments adjacents, comprend deux paires de palonniers rigides portant chacun deux galets mobiles en rotation et une paire de palonniers flexibles portant chacun deux galets mobiles en rotation, chaque paire de palonniers étant disposée entre deux cornières venant en vis-à-vis, les paires de palonniers étant fixées à une des extrémités du segment dans une zone correspondant à un recouvrement des segments adjacents en position déployée.

Dans un mode de réalisation, chaque système d'engagement comprend une tige externe d'accrochage solidarisée à ladite cornière du premier segment, la tige d'accrochage entraînant une came en crochet du système de séquencement du deuxième segment, la came en crochet étant mobile en rotation par rapport à ladite cornière du deuxième segment jusqu'à une position de butée et de blocage latérale de la tige d'accrochage, la came en crochet commandant la position d'un verrou en crochet mobile en rotation par rapport à ladite cornière du deuxième segment jusqu' à une position verrouillée où le verrou en crochet réalise un blocage latéral complémentaire de la tige d'accrochage, le verrou en crochet comprenant par ailleurs un doigt de blocage du système de séquencement dudit troisième segment, ce doigt se dégageant pour libérer le système de séquencement du troisième segment dans la position verrouillée.

Dans un mode de réalisation, le système d'engagement du premier segment comporte une butée fixe et une butée mobile, le système de séquencement du deuxième segment comprenant une butée fixe anti-retour coopérant avec la butée mobile du système d'engagement, le système de séquencement du deuxième segment comprenant une butée fixe retenant une butée mobile du système de séquencement du troisième segment, le système de séquencement du deuxième segment comprenant un loquet pivotant dont une rampe est actionnée par la butée fixe du système d'engagement du premier segment pour dégager la butée mobile du système de séquencement du troisième segment, la rampe du loquet ainsi que la butée fixe et la butée mobile étant agencés pour venir dans un passage aménagé entre des bras flexibles portant la butée mobile du système de séquencement du deuxième segment.

Dans un mode de réalisation, le système d'entraînement comporte une tige filetée commandée en rotation et coopérant successivement avec des écrous reliés aux bases des segments, à l'exception du segment externe fixe, chaque écrou étant maintenu avec un jeu longitudinal dans un support périphérique relié par ailleurs à des bras déformables disposés dans un plan radial de l'écrou, ces bras étant fixés par ailleurs à des poutres solidaires des cornières.

Dans un mode de réalisation, les bras déformables, en position non déformée, viennent en appui sur des cales disposées parallèlement au plan radial de l'écrou pour empêcher une translation de l'écrou vers la base du mât et autoriser une translation de l'écrou vers l'extrémité distale du segment.

La présente invention va maintenant être décrite plus en détails en référence notamment aux exemples non limitatifs représentés sur les dessins.

### Brève description des dessins

[fig.1A] représente une vue de côté d'un mât télescopique selon l'invention en position repliée.
[fig.1B] représente une vue de côté du mât télescopique de la figure 1A en position complètement déployée.
[fig.1C] représente une vue en coupe transversale, au niveau de la base du segment fixe, du mât télescopique de la figure 1A en position repliée.
[fig.2] représente un exemple de configuration géométrique pour la mise en oeuvre d'un segment de mât télescopique selon l'invention.
[fig.3] représente une vue de côté de la configuration géométrique de la figure 2.
[fig.4A] représente des vues en perspective d'un palonnier rigide et d'un palonnier flexible destinés à être mis en place sur les cornières des segments d'un mât télescopique selon l'invention.
[fig.4B] représente des vues éclatées du palonnier rigide et du palonnier flexible de la figure 4A.
[fig.5A] représente le positionnement, dans une représentation transversale, des systèmes de guidage entre deux segments adjacents.
[fig.5B] représente le positionnement, dans une représentation longitudinale des systèmes de guidage entre deux segments adjacents.
[fig.6] représente une vue en perspective arrière d'une base d'un segment de mât télescopique selon l'invention.
[fig.7] représente une vue de côté de la base de la figure 6.
[fig.8] représente, de manière schématique, le système d'entraînement du mât télescopique selon l'invention.
[fig.9A] représente une vue en perspective d'une face d'un écrou orientée vers l'extrémité distale d'un segment selon l'invention.
[fig.9B] représente une vue en perspective de la face de l'écrou de la figure 9A, orientée vers l'extrémité proximale d'un segment selon l'invention.
[fig.10] représente une vue de face d'un mât télescopique en position repliée.
[fig.11] représente un détail montrant les bases des segments emboités.
[fig.12A] représente un système d'engagement dans un premier mode de réalisation.
[fig.12B] représente une vue éclatée d'un système de séquencement dans le premier mode de réalisation associé au système d'engagement de la figure 12A.
[fig.12C] représente une vue en perspective du système de séquencement dans le premier mode de réalisation.
[fig.13A] représente une vue en coupe de la configuration du système de synchronisation, dans le premier mode de réalisation, lors d'une première étape.
[fig.13B] représente une vue en coupe de la configuration du système de synchronisation, dans le premier mode de réalisation, lors d'une seconde étape.
[fig.13C] représente une vue en coupe de la configuration du système de synchronisation, dans le premier mode de réalisation, lors d'une troisième étape.
[fig.13D] représente une vue en coupe de la configuration du système de synchronisation, dans le premier mode de réalisation, lors d'une quatrième étape.
[fig.13E] représente une vue en coupe de la configuration du système de synchronisation, dans le premier mode de réalisation, lors d'une cinquième étape.
[fig.13F] représente une vue en coupe de la configuration du système de synchronisation, dans le premier mode de réalisation, lors d'une sixième étape.
[fig.14A] représente une vue éclatée d'un système d'engagement, dans un second mode de réalisation.
[fig.14B] représente une vue éclatée d'un système séquencement, dans le second mode de réalisation, associé au système d'engagement de la figure 14A.
[fig.15A] représente une vue de côté du système de synchronisation, dans le second mode de réalisation.
[fig.15B] représente une vue en perspective du système de synchronisation, dans le second mode de réalisation.
[fig.16A] représente une vue en coupe de la configuration du système de synchronisation, dans le second mode de réalisation, lors d'une première étape.
[fig.16B] représente une vue en coupe de la configuration du système de synchronisation, dans le second mode de réalisation, lors d'une seconde étape.
[fig.16C] représente une vue en coupe de la configuration du système de synchronisation, dans le second mode de réalisation, lors d'une troisième étape.
[fig.16D] représente une vue en coupe de la configuration du système de synchronisation, dans le second mode de réalisation, lors d'une quatrième étape.
[fig.16E] représente une vue en coupe de la configuration du système de synchronisation, dans le second mode de réalisation, lors d'une cinquième étape.
[fig.16F] représente une vue en coupe de la configuration du système de synchronisation, dans le second mode de réalisation, lors d'une sixième étape.
[fig.17] représente schématiquement les états successifs des systèmes de synchronisation, des premier et second modes de réalisation.

### Description détaillée

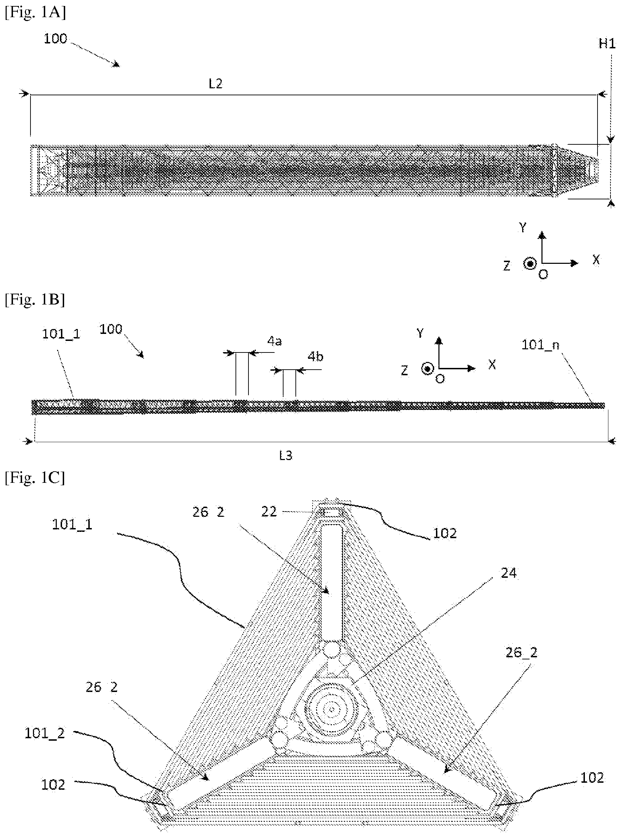

La figure 1A représente une vue de côté d'un mât 100 télescopique selon l'invention dans une position repliée où les segments sont emboîtés les uns dans les autres. De façon avantageuse, les segments présentant une faible épaisseur, il est possible d'emboîter un nombre important de segments et ainsi d'atteindre une longueur importante lorsque le mât est déployé, tout en conservant un encombrement réduit en position repliée du mât. L'encombrement maximal en hauteur H1 est par exemple de 0,21 mètre permettant d'emboîter onze segments les uns dans les autres. Ce mât en position repliée présente par exemple un encombrement en longueur L2 de 2,3 mètres.

La figure 1B représente une vue de côté du mât télescopique de la figure 1A dans une position complètement déployée. Les segments coaxiaux référencés 101_1 à 101_N peuvent être commandés de la position repliée en une position déployée. Ce mât déployé comprenant onze segments permet, par exemple, d'obtenir une longueur L3 de 17,5 mètres. Des zones de recouvrement 4a et 4b sont prévues entre chacun des segments adjacents pour assurer la liaison d'un segment à l'autre. Sur la figure 1B, seules deux zones de recouvrement ont été référencées de part et d'autre d'un des segments.

Le mât télescopique s'étend selon un axe longitudinal (O, X) selon lequel il est apte à se déployer, en référence au repère orthonormal (O, X, Y, Z). L'axe (O,X) correspond à l'axe longitudinal des segments et à l'axe de l'écrou et de la vis de commande en translation. Un plan transversal des segments ou un plan radial de l'écrou ou de la vis de commande est ainsi parallèle à un plan (O, Y, Z) et perpendiculaire à l'axe longitudinal (O,X).

Dans la suite de la description, il sera adopté la convention suivante : le segment extérieur qui reste fixé au bâti, lors du déploiement, est référencé 101_1. Le segment le plus à l'intérieur qui est disposé à l'extrémité distale du mât 100 en position déployée est référencé 101_N, où N correspond au nombre de segments du mât télescopique 100. Le segment 101_i correspond ainsi au i-ème segment en partant du segment le plus à l'extérieur 101_1.

La figure 1C représente une vue en coupe transversale, au niveau de la base du segment fixe du mât télescopique de la figure 1A dans une position repliée du mât.

Le segment fixe 101_1 présente une section en polygone formant par exemple un triangle équilatéral. Un polygone régulier est par exemple choisi pour la section des segments. Les segments emboîtés les uns dans les autres présentent des sections proportionnelles, de plus en plus réduites.

Le segment 101_2 est guidé par des rouleaux 22, par rapport au segment 101_1, permettant une translation du segment 101_2 par rapport au segment adjacent 101_1. Cette translation est commandée grâce à un écrou 24 venant coopérer avec le filetage d'une vis de commande, comme décrit plus en détails par la suite. Cet écrou 24 est maintenu dans une structure triangulaire reliée par ailleurs à des poutres 26_2 solidarisées aux cornières 102 du segment 101_2.

Chacun des segments est composé d'un même nombre de cornières solidarisées entre elles pour former une structure longitudinale creuse présentant une section polygonale. Le polygone est aplani aux coins.

Les profils transversaux triangulaires sont de plus en plus petits, les segments de section de plus en plus réduite s'emboîtant ainsi les uns dans les autres. La section polygonale est ici en forme de triangle équilatéral. Les angles du triangle sont aplanis et correspondent à l'emplacement des cornières. Les cornières de deux segments adjacents viennent en vis-à-vis les unes des autres.

La section peut se présenter sous la forme d'un polygone régulier, comme par exemple un triangle équilatéral. On entend par « polygone régulier » un polygone dont tous les côtés ont la même longueur et dont tous les angles présentent la même mesure. Les angles du polygone sont par ailleurs aplanis et correspondent à l'emplacement des cornières.

Les cornières, dans chaque segment à l'exception du segment fixe, sont chacune reliées, à leur extrémité proximale, à un écrou.

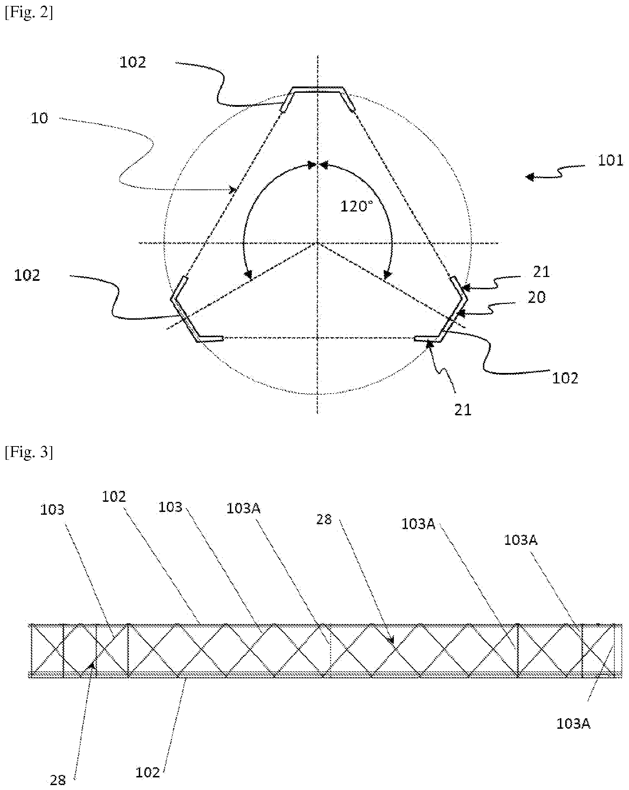

La figure 2 représente un exemple de configuration géométrique d'un segment de mât télescopique selon l'invention. La section est ici en triangle équilatéral mais pourrait se présenter sous la forme d'un autre polygone.

Chaque segment 101 est composé d'un même nombre déterminé de cornières 102 solidarisées entre elles et s'étendant selon toute la longueur du segment 101. Les cornières 102, disposées aux sommets du polygone, sont au minimum au nombre de trois. Chaque cornière 102 comprend une partie centrale plane 20 bordée par deux ailes latérales 21. La partie centrale 20 et les ailes 21 sont formées par un profil à trois pans en fibres tissées. Ces portions de fibres tissées sont plaquées sur un moule 10, lors de la fabrication.

Ainsi les ailes voisines, d'une cornière à l'autre, sont disposées dans un même plan. Les cornières sont par ailleurs solidarisées entre elles par des éléments de solidarisation en fibres plaqués sur les profils à trois pans et autour du moule 10, lors de la fabrication. Les cornières et les éléments de solidarisation sont par exemple réalisés d'une seule pièce, par durcissement des fibres. Les fibres sont par exemple imprégnées de résine puis polymérisées dans une étuve. On prévoit par exemple une vessie entourant le moule 10 puis mise sous vide pour plaquer les fibres contre le moule 10, avant de le placer dans l'étuve.

L'angle intérieur entre la portion centrale et chaque aile forme un angle obtus, c'est-à-dire supérieur à 90° et inférieur à 180°. La valeur de cet angle dépend du nombre de cornières et du polygone formé par lesdites cornières. Dans l'exemple illustré, trois cornières sont mises en oeuvre et les ailes 21 forment chacune avec la portion centrale 20 un angle de 120 degrés.

L'homme du métier comprendra qu'un nombre plus important de cornières peut être utilisé. En variante, un polygone régulier peut par exemple présenter, dans des modes de réalisation non représentés, quatre, cinq, six ou huit segments formant ses côtés. Il est ainsi tout à fait envisageable par exemple de considérer un ensemble de quatre cornières formant un carré ou un ensemble de cinq cornières formant un pentagone régulier.

Les cornières 102 sont par exemple reliées et maintenues entre elles par enroulement filamentaire, par exemple au moyen de fibres ou tissu carbone.

Par « cornières voisines » on entend deux cornières placées en deux sommets consécutifs du polygone formé par l'ensemble des cornières dans un même segment.

La figure 3 représente une vue de côté de la configuration géométrique de la figure 2.

L'enroulement filamentaire comprend un ensemble de bobinages s'étendant sur toute la longueur du segment. Cet ensemble comprend par exemple deux bobinages 103 par cornières, ces deux bobinages 103 s'enroulant respectivement en sens horaire et en sens antihoraire autour des cornières 102 et démarrant en deux extrémités opposées de chaque cornière 102. On évite notamment un vrillage lors de la cuisson pour les fibres de carbone. La stabilité géométrique est par ailleurs améliorée.

Le segment peut également comprendre des bobinages 103A disposé selon un plan radial du segment sur toute sa périphérie. Ces bobinages 103A forment ainsi des ceintures permettant de rendre la structure plus rigide. Ces ceintures sont par exemple disposées aux extrémités du segment ou en son milieu. Ces ceintures peuvent également être disposées de part et d'autre des zones prévues pour la fixation des systèmes de guidage tels que des palonniers. On évite notamment une flexion excessive des cornières sous la pré-charge des galets.

Les plis des bobinages multi-plis sont entrelacés au niveau de points de jonction 28 des bobinages. L'entrelacement permet d'améliorer la rigidité du segment.

Les bobinages peuvent également être remplacés par des fibres déposées individuellement. Les fibres peuvent être déposées sur toute la périphérie du segment selon un plan transversal. Les fibres peuvent aussi être enroulées sur la périphérie du segment sur toute la longueur du segment.

Le segment présente ainsi une structure creuse et ajourée.

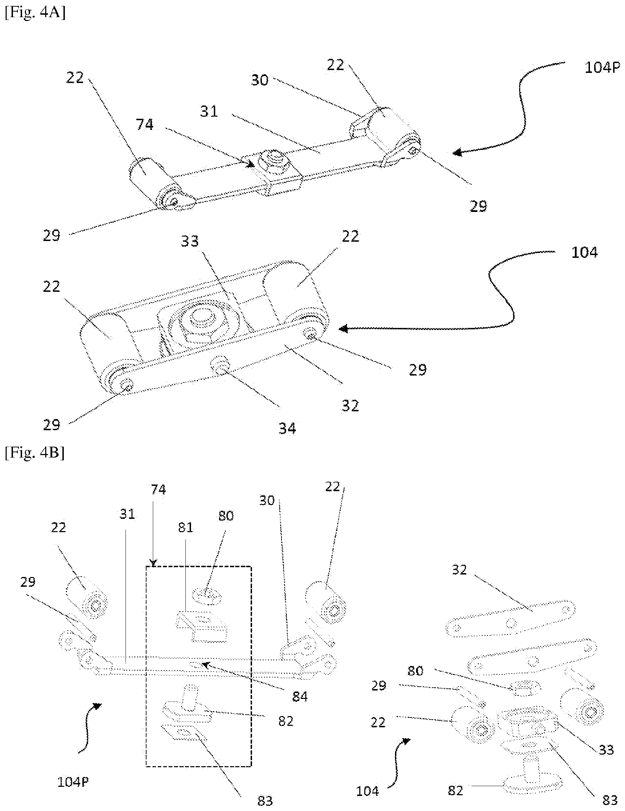

La figure 4A représente des vues en perspective d'un palonnier rigide et d'un palonnier flexible destinés à être mis en place sur les cornières des segments d'un mât télescopique selon l'invention. Le palonnier flexible 104P comprend deux galets 22 cylindriques mobiles en rotation autour de leur axe 29. Les axes 29 des galets 22 sont maintenus par des oreilles latérales 30 solidarisées à une lame flexible 31, elle-même solidarisée en son milieu à une cornière. La lame flexible 31 est reliée à une cornière par un support central 74 et est réglable en hauteur par rapport à la cornière. La lame flexible non déformée est disposée parallèlement à une cornière et perpendiculairement aux oreilles 30. La lame flexible 31 présente une épaisseur déterminée permettant une déformation des palonniers flexibles disposés dans le mât de façon à exercer un effort de pré-charge. L'effort de pré-charge sera notamment réglé par ajustement de la hauteur de la lame 31 par rapport à la cornière. Le réglage de cette hauteur sera effectué lors du montage en fonction de l'écart réel entre deux cornières successives. Ce réglage de la pré-charge permet avantageusement de compenser les éventuelles imprécisions dimensionnelles des cornières.

Le palonnier rigide 104 comprend deux galets 22 cylindriques mobiles en rotation autour de leur axe 29. Les axes 29 des galets 22 sont maintenus par des bras rigides 32 articulés avec un support 33 de fixation à une cornière, selon un axe 34 parallèle aux axes 29 des galets 22. Les bras rigides 32 s'étendent selon un plan perpendiculaire à une cornière et présentent une épaisseur permettant de leur conférer une rigidité suffisante telle que les axes 29 des galets, conservent une distance constante entre eux et avec l'axe 34 de liaison pivot par rapport au support 33.

Pour des segments à trois cornières, on utilise ainsi deux paires de palonniers rigides disposées sur deux cornières distinctes et une paire de palonniers flexibles disposée sur la troisième cornière. Les dimensions des palonniers sont choisies de façon à ce que le palonnier flexible soit déformé, le système de guidage étant alors pré-chargé. Le guidage est ainsi réalisé avec précision, sans risquer un blocage hyperstatique.

La figure 4B représente des vues éclatées du palonnier flexible et du palonnier rigide de la figure 4A. Le palonnier flexible comprend notamment une cale 83 dont l'épaisseur est choisie pour régler la hauteur de la lame 31 lors du montage. Le support central 74 comprend un écrou 80 se vissant sur la tige filetée d'une embase 82. Cette tige filetée passe par exemple dans un alésage de la cornière et dans un alésage 84 de la lame flexible 31. La cale présente par exemple un alésage et vient se monter sur la tige filetée saillante de l'embase 82. La cale peut ainsi être disposée entre la cornière et la lame flexible 31. L'écrou 80 vient se serrer contre une plaquette 81 en U montée sur la lame 31 flexible. Le palonnier flexible 104P comprend ainsi une embase 82 comprenant une tige filetée saillante passant par des alésages d'une cornière, de la cale 83, de la lame flexible 31 et de la plaquette 81 pour coopérer avec l'écrou 80 de serrage.

Le palonnier rigide 104 comprend par exemple également une embase 82 comprenant une tige filetée saillante passant par des alésages d'une cornière, d'une cale 83 et du support 33 pour coopérer avec un écrou 80 de serrage. Le palonnier rigide comprend par exemple également une cale 83 dont l'épaisseur est choisie pour régler la hauteur du support 33.

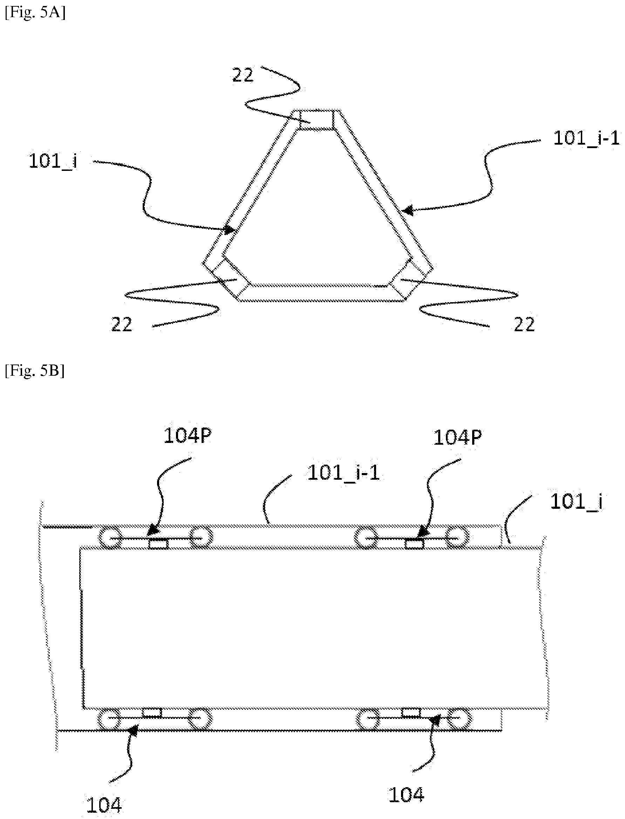

La figure 5A représente le positionnement, dans une représentation transversale des palonniers vis-à-vis de deux segments adjacents. Chaque système de guidage 104 et 104P est ainsi disposé entre un segment 101_i-1 et un segment adjacent 101_i dont les cornières viennent en vis-à-vis. Chaque système de guidage est fixé sur la partie centrale de l'une des deux cornières en vis-à-vis tandis que ses galets 22 viennent rouler contre la partie centrale de l'autre des deux cornières en vis-à-vis. On prévoit par exemple des systèmes de guidage sur les trois cornières pour des segments à trois cornières.

La figure 5B représente le positionnement, dans une représentation longitudinale des palonniers vis-à-vis de deux segments adjacents. On prévoit par exemple deux paires de palonniers sur chaque cornière entre un segment 101_i-1 et un segment adjacent 101_i. Une paire flexible est fixée sur une des trois cornières tandis que deux paires rigides sont fixées chacune sur une des deux autres cornières. Chaque paire de palonniers 104 ou 104P est disposée entre deux cornières venant en vis-à-vis. Les paires de palonniers 104 ou 104P sont fixées à une des extrémités du segment 101_i dans une zone correspondant à un recouvrement des segments adjacents en position déployée, comme représenté à la figure 5B.

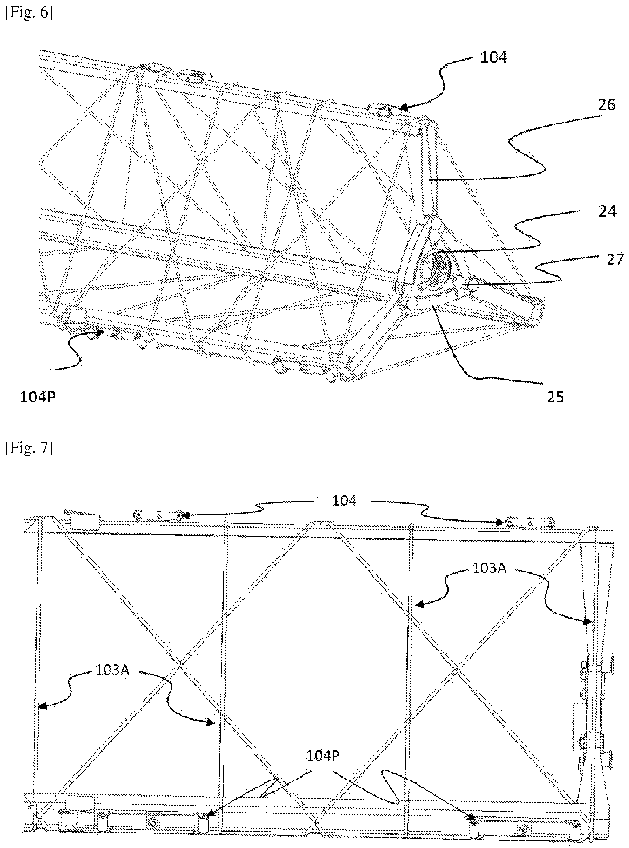

La figure 6 représente une vue en perspective arrière d'une base d'un segment de mât télescopique selon l'invention.

Les palonniers 104 et 104P sont fixés sur les cornières, à la base du segment. Les poutres 26 sont solidarisées au profil intérieur de chacune des trois cornières. Ces poutres 26 présentent une longueur permettant l'accrochage des trois bras 25 flexibles de liaison avec l'écrou 24. Les bras flexibles déformés en même temps permettent une translation de l'écrou vers l'extrémité distale du segment. Un mouvement contraire de l'écrou vers la base du segment est empêché grâce aux cales 27.

La figure 7 représente une vue de côté de la base de la figure 6.

Deux paires de palonniers 104 et 104P flexibles et rigides sont représentées, une paire de palonniers rigides n'étant pas apparente. Chaque palonnier est fixé à une cornière entre deux ceintures 103A entourant le segment radialement sur toute sa périphérie.

Chaque cornière est ainsi solidarisée à une paire de palonniers, disposés l'un derrière l'autre et fixés sur une face externe de la portion centrale de cette cornière. Les palonniers fixés sur les faces externes des cornières du segment 101_i, sont disposés par ailleurs avec leurs galets venant en appui les faces internes des portions centrales 20 des cornières 102 du segment extérieur adjacent 101_i-1. Chaque galet de chaque palonnier, flexible ou rigide, vient rouler sur la portion centrale d'une cornière, entre les ailes de cette cornière qui sont disposées de part et d'autre du galet.

Les palonniers flexibles 104P, montés entre deux cornières de deux segments adjacents, sont pré-chargés par déformation élastique de leur bras de support des galets. Ce pré-chargement exerce un effort constant entre deux cornières de deux segments adjacents, dans la position repliée, lors du déploiement et dans la position déployée du mât télescopique 100. Les palonniers flexibles présentent une raideur déterminée, dite « faible », permettant d'assurer un maintien de la pré-charge compensant d'éventuelles variations géométriques des cornières qui peuvent être déformées aux endroits de fixation des palonniers ou de contact avec les galets et qui peuvent également présenter des défauts de forme. Si on considère par exemple des segments de section triangulaires, les centres des cercles circonscrits pour différentes sections, tout le long d'un même segment, peuvent présenter un défaut de concentricité entre sections successives ou le diamètre de ces cercles peut varier.

Les palonniers rigides 104 exercent chacun un appui de deux cylindres d'axes parallèles sur un plan formé par la cornière 102 du segment extérieur 101_i-1 avec lequel les galets sont en contact. Chaque palonnier rigide réalise ainsi une liaison équivalente un roulement cylindrique en appui linéaire. On combine ainsi avantageusement les paires de palonniers rigides et les paires de palonniers flexibles, de façon à avoir un système pré-chargé tout en évitant d'avoir un système hyperstatique.

Dans le mât, les palonniers flexibles peuvent être répartis tout autour du mât d'un segment à l'autre. Les palonniers flexibles peuvent aussi être disposés sur une même arrête du mât, d'un segment à l'autre, ce qui facilite le montage lorsqu'on règle la position finale du palonnier flexible au moment du montage.

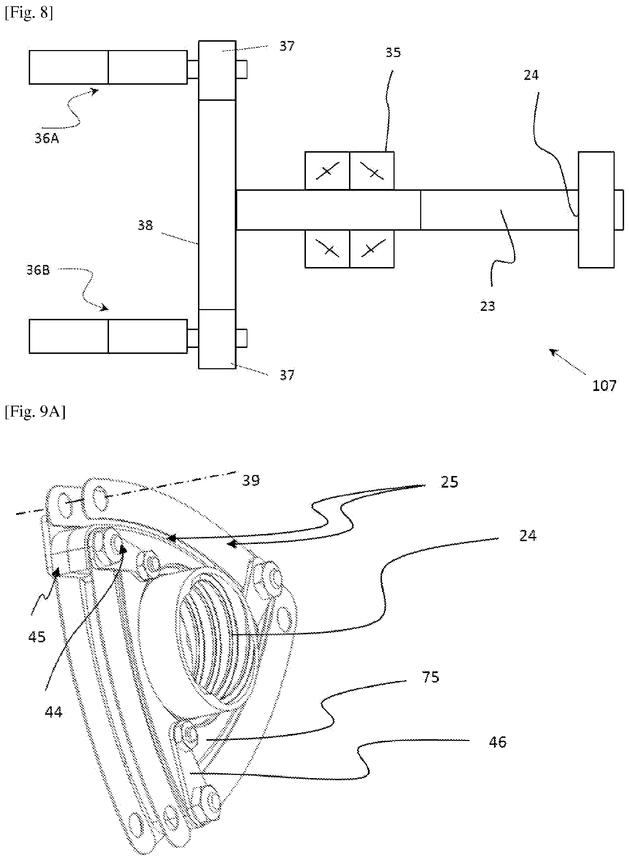

La figure 8 représente, de manière schématique, le système d'entraînement du mât télescopique selon l'invention.

Le système d'entraînement 107 comporte un ensemble de deux motoréducteurs 36A et 36B assurant une redondance électrique pour le déploiement. Les motoréducteurs 36A et 36B sont reliés chacun à un pignon 37, solidaire de l'arbre de sortie du motoréducteur. Ces pignons 37 engrainent avec une roue dentée 38 solidaire de la tige filetée 23. Le système d'entraînement 107 comporte par exemple deux rangées de roulements à contact oblique 35 guidant en rotation la tige filetée 23 de commande par rapport au bâti. La tige filetée, entraînée en rotation, commande ainsi une translation longitudinale des écrous 24. Les écrous 24 sont entraînés successivement par la tige filetée 23. Deux écrous sont simultanément entraînés quand l'un des écrous s'engage sur le filetage de la tige filetée, tandis que l'autre écrou s'en dégage.

La figure 9A représente une vue en perspective d'une face d'un écrou orientée vers l'extrémité distale d'un segment selon l'invention.

Chaque écrou 24 est maintenu par des paires de bras 25 déformables disposés dans un plan radial de l'écrou 24. Ces bras sont fixés par ailleurs aux poutres de solidarisation avec les cornières, autour d'un axe 39 parallèle à l'axe de l'écrou 24. Les bras sont fixés de part et d'autre autour de deux axes 39 et 44 maintenus parallèles entre eux par des entretoises 45 et permettent ainsi une translation de l'écrou 24 par déformation élastique des bras 25. Pour la clarté du dessin, seule une des deux entretoises 45 a été représentée. Un des axes 44 est solidarisé à un support 75 de l'écrou 24, par une plaquette 46. L'écrou 24 présente une portion cylindrique filetée et est relié à au support périphérique 75 permettant notamment une fixation à la plaquette 46 reliée aux bras 25. Le support périphérique 75 est par exemple de section triangulaire. Le support périphérique 75 maintient également l'écrou avec un jeu permettant un flottement radial de l'écrou.

Les bras 25 s'étendent dans un plan radial de l'écrou 24 sous la forme de lames courbées. Leur épaisseur selon le plan longitudinal ainsi que leur longueur et leur largeur selon le plan radial sont choisies pour permettre une élasticité déterminée.

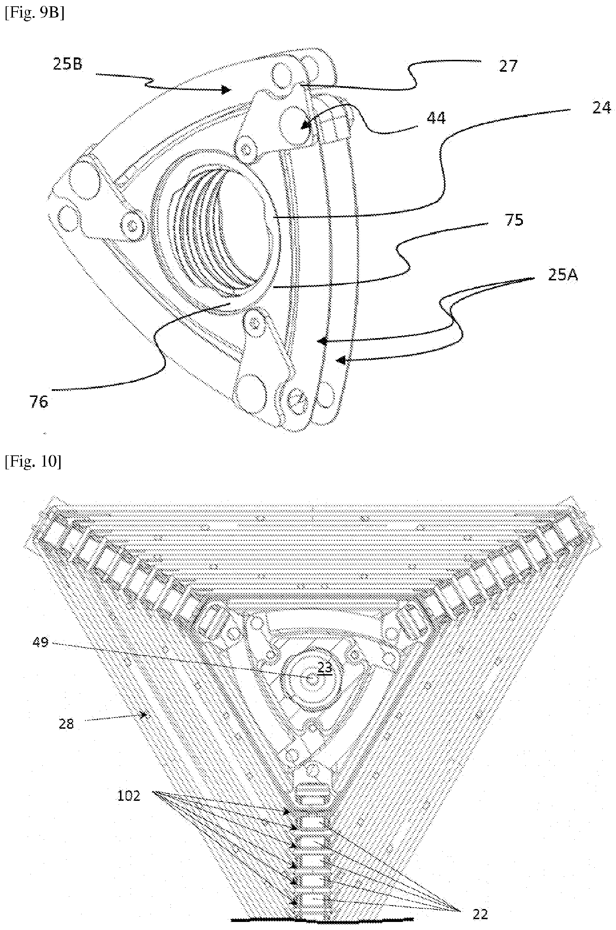

La figure 9B représente une vue en perspective de la face de l'écrou de la figure 9A, orientée vers l'extrémité proximale d'un segment selon l'invention.

Pour son maintien avec un flottement radial, l'écrou se prolonge par exemple latéralement par une collerette 76 maintenue dans un logement interne du support périphérique 75. L'axe 44 est également solidarisé au support de l'écrou 24 et aux bras 25A par une cale 27 qui s'étend par ailleurs radialement pour venir en vis-à-vis d'un bras 25B voisin et ainsi empêcher son déplacement dans un sens. Les cales 27 fixées sur la face du support de l'écrou disposée vers l'extrémité proximale du segment, empêchent une translation de l'écrou 24 en position de repos, vers l'extrémité proximale et autorisent sa translation vers l'extrémité distale. Les bras 25 déformables, en position non déformée, viennent ainsi en appui sur des cales 27 disposées parallèlement au plan radial de l'écrou 24. Lors du déploiement du segment 101_i, l'écrou transmet à ce segment un effort de poussée exercé par la liaison hélicoïdale de la vis 23 sur l'écrou 24. Le mouvement en translation autorisé par les bras élastiques permet avantageusement d'apporter un degré de liberté notamment lorsque deux écrous sont entraînés simultanément sur la vis de commande.

La figure 10 représente une vue de face d'un mât télescopique selon l'invention.

Dans cette position, les bases sont empilées les unes sur les autres. Les segments entre le segment fixe et le segment d'extrémité sont maintenus par les systèmes séquencements maintenus deux à deux. L'écrou du segment d'extrémité 101_N est engagé avec la tige filetée de commande qui le maintient immobile. Par ailleurs, l'ensemble du mât en position repliée est maintenu par un système de gerbage permettant de plaquer l'ensemble des segments contre le bâti notamment lors du transport et notamment au lancement. Le système de gerbage est dégagé avant le début du déploiement. Le système de gerbage comprend un câble central 49 tirant l'extrémité du mât en position repliée, vers sa base. Le système de gerbage complet n'est pas représenté.

La géométrie et notamment la longueur de chaque poutre dépend de son emplacement dans le mât. Les dimensions de chaque poutre permettent la transmission des efforts de poussée aux cornières.

Dans la position repliée, les cornières 102 sont disposées les unes au dessus des autres et positionnées les unes par rapport aux autres grâce aux galets 22 des palonniers.

Dans chaque segment, les cornières sont solidarisées entre elles par enroulement filamentaire et s'entrelacent en des points de jonction 28.

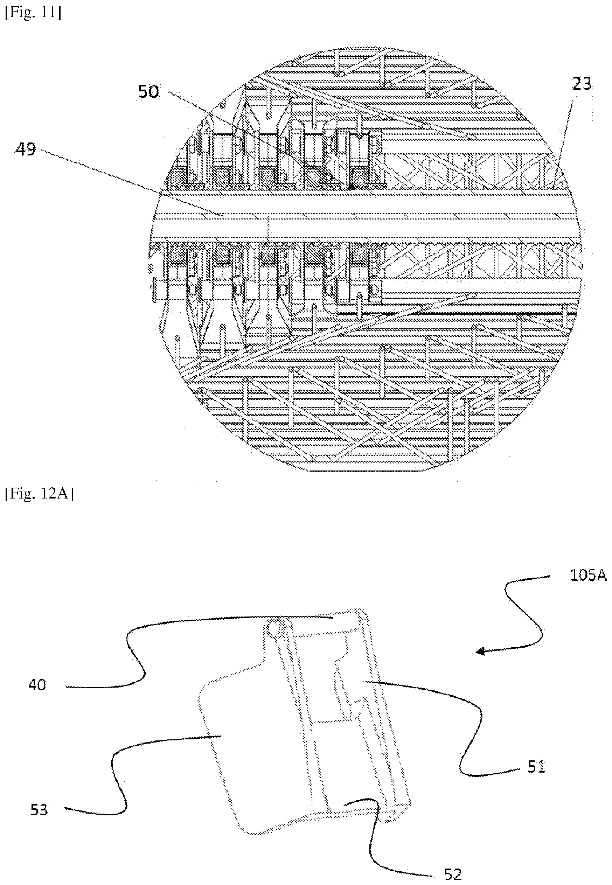

La figure 11 représente un détail à la base des segments dans la position repliée du mât.

Seul le segment d'extrémité est engagé dans le filetage. La fin du filetage du côté proximal de la tige de commande est indiquée par la référence 50. Ainsi une fois que le système de gerbage 49 est dégagé, la tige de commande filetée 23 peut être commandée en rotation pour faire avancer ce segment N. La tige filetée 23 est par exemple creuse pour y aménager le câble 49 de retenu du système de gerbage. La tige filetée 23 est commandée en rotation et coopère successivement avec les écrous 24 reliés aux bases des segments, à l'exception du segment externe fixe. Le segment N est le premier à se déployer puis, lorsque son écrou arrive à proximité de l'extrémité filetée de la tige de commande 23, le système de synchronisation entraîne le segment suivant N-1 qui se libère par ailleurs du segment N-2. L'écrou du segment N-1 s'engage alors avec le filetage de la tige de commande 23, puis l'écrou du segment N se libère de la tige de commande 23.

La solidarisation des segments N et N-1 se fait grâce au système de synchronisation. La solidarisation des segments N-1 et N-2 puis leur désolidarisation se fait également grâce au système de synchronisation. Le système de synchronisation comporte des systèmes d'engagement et des systèmes de séquencement chacun positionnés sur une cornière de façon à assurer un nouvel entrainement d'un des segments puis une libération de ce segment précédemment immobilisé.

Chaque segment situé entre le segment fixe et le segment d'extrémité, comprend au moins un système d'engagement et un système de séquencement fixés sur une de ses cornières. Le segment d'extrémité porte au moins un système d'engagement tandis que et le segment fixe porte au moins un système de séquencement.

Le système d'engagement d'un segment N coopère avec le système de séquencement fixé sur la cornière en vis-à-vis d'un segment adjacent N-1. Le système de séquencement du segment N-1 coopère par ailleurs avec le système de séquencement fixé sur la cornière en vis-à-vis d'un segment N-2 adjacent. L'avance de chaque segment induit la solidarisation d'un système d'engagement avec un système de séquencement et induit la désolidarisation de deux systèmes de séquencement.

Le mât télescopique selon l'invention permet ainsi le déploiement linéaire d'un équipement spatial, tout en présentant une masse faible et une bonne fiabilité. L'équipement spatial peut par exemple être une voile solaire flexible, un déflecteur, un miroir pour instrument optique, un réflecteur d'antennes. Le bâti, relié au segment fixe, correspond par exemple au corps du satellite ou à support mobile relié au satellite. La structure polygonale des segments composant le mât télescopique présente notamment les avantages suivants :
- la section polygonale assure naturellement une anti-rotation lors du guidage ;
- la structure polygonale en treillis permet de diminuer la masse du mât de manière significative, diminuer les coûts de production, et réduire la sensibilité thermoélastique du mât lorsque celui-ci est exposé au soleil ;
- le guidage pré-chargé permet d'assurer une excellente précision de déploiement, quelles que soient les conditions de déploiement, et de fournir une force de déploiement adaptée à une voile solaire ainsi qu'une raideur en position déployée adaptée à une voile solaire ;
- le mât télescopique selon l'invention permet d'atteindre un ratio de compacité supérieur à deux le ratio de compacité étant défini ici comme le rapport entre longueur du mât en position déployée et la longueur du mât en position repliée.

On peut par exemple prévoir un système d'engagement et un système de séquencement par cornière. On peut aussi prévoir certaines des cornières dépourvues de système d'engagement et de système de séquencement, le long d'une ou plusieurs arêtes du mât.

Des systèmes de synchronisation, selon des premier et second modes de réalisation, assurant une excellente fiabilité de la cinématique vont maintenant être décrits.

La figure 12A représente un système d'engagement dans un premier mode de réalisation.

Le système d'engagement 105A comprend une tige externe d'accrochage 40 maintenue par des portions 51 de support dans lesquelles la tige d'accrochage est maintenue par ses extrémités. La tige d'accrochage 40 est perpendiculaire à l'axe longitudinal de la cornière et perpendiculaire à un axe normal à la portion centrale de cette cornière. La tige d'accrochage présente une longueur correspondant à la largeur de la portion centrale des cornières et une section circulaire. Les portions de support 51 s'étendent au-dessus des cornières et sont prolongées d'une part par une entretoise 52 venant se fixer contre la portion centrale d'une cornière et d'autre part par des ailes 53 venant se fixer contre les ailes d'une cornière. On entend par « au-dessus » de la cornière, une position plus éloignée du centre du segment que la cornière, selon une direction radiale. A l'inverse on entend par « au-dessous » de la cornière, une position moins éloignée du centre du segment que la cornière, selon une direction radiale.

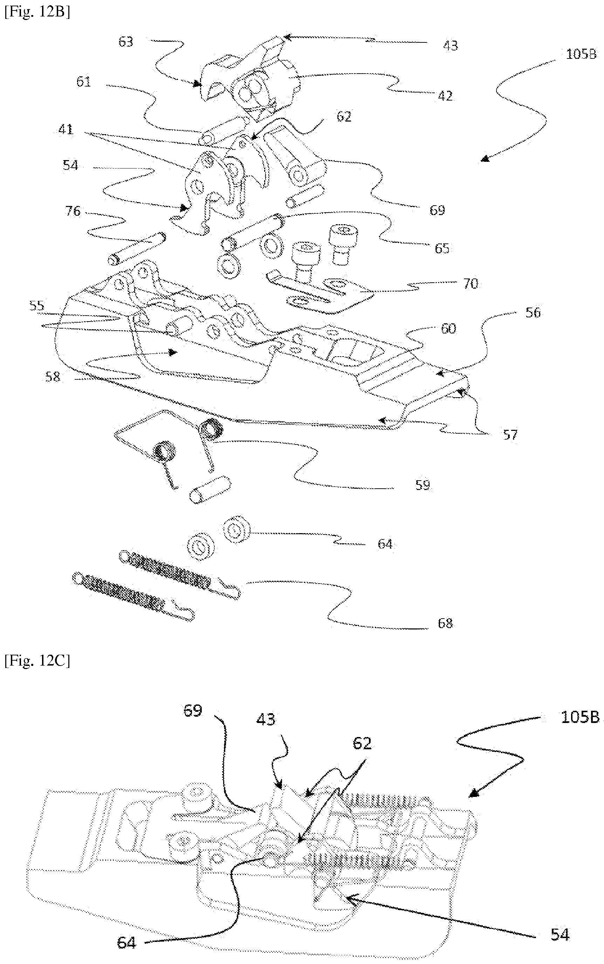

La figure 12B représente une vue éclatée du système de séquencement dans le premier mode de réalisation associé au système d'engagement de la figure 8A.

Le système de séquencement 105B comprend un support 60 fixé sur une cornière comprenant une portion centrale 56 fixée sur la portion centrale de la cornière et prolongée par des ailes 57 fixées sur les ailes de la cornière. Un jour 58 est aménagé dans la portion centrale 56 et les ailes 57 du support 60, un passage en regard étant également aménagé dans la cornière. Ce passage permet un débattement de la came 41 et du crochet de verrouillage 42 pour venir bloquer la tige d'accrochage longeant la face interne de la cornière.

La came en crochet 41, formée par deux profils jumeaux, forme un crochet 54 destiné à retenir la tige d'accrochage 40 d'un système d'engagement. La came 41 en crochet est articulée autour d'un axe 55 par rapport au support 60. La came 41 est par ailleurs maintenue élastiquement par un ressort 59. La came 41 comprend un axe 61 réalisant d'une part une entretoise entre ses deux profils jumeaux et d'autre part un arrêt contre le support 60 en fin de rotation. La came comprend une zone 62 commandant en position un crochet de verrouillage 42. Cette zone se termine par un renfoncement autorisant la rotation du crochet de verrouillage pour libérer son doigt et bloquer de façon complémentaire la tige d'accrochage du système d'engagement.

Le crochet de verrouillage 42 comprend une portion en crochet 63 destinée à réaliser un blocage de la tige d'accrochage 40 d'un système d'engagement. Ainsi cette tige d'accrochage sera bloquée entre la came en crochet 41 et le crochet de verrouillage 42. Le crochet de verrouillage 42 est mobile en rotation par rapport au support 60. Le crochet de verrouillage comprend à cet effet un alésage central pour son axe de rotation. Le crochet de verrouillage comprend par ailleurs un alésage décentré recevant un axe 65 de support de deux galets cylindriques creux 64 coopérant avec la zone de commande 62 de la came 41. Cet axe 65 permet également l'accrochage de ressorts 68 attachés à un axe 76 maintenu au support 60 et retenant le crochet de verrouillage de manière élastique. Le crochet de verrouillage comprend également son doigt 43 de solidarisation coopérant avec le support d'un autre système d'engagement. Dans la position de verrouillage du crochet de verrouillage 42, ce doigt 43 se dégage du support de cet autre système d'engagement.

Le crochet de verrouillage 42 est par ailleurs maintenu dans sa position verrouillée grâce à un loquet 69 coopérant avec un logement anti-retour du crochet de verrouillage. Ce loquet 69 est mobile en rotation par rapport au support 60 et maintenu élastiquement en position par un ressort 70.

Le loquet, la came en crochet et le crochet de verrouillage comprennent chacun leur axe de rotation perpendiculaire à l'axe longitudinal de la cornière et perpendiculaire à un axe normal à la portion centrale de cette cornière.

La figure 12C représente un système de séquencement dans le premier mode de réalisation associé au système d'engagement de la figure 8A.

Le loquet 69 est relevé et maintenu de façon élastique en appui sur le crochet de verrouillage en le laissant libre de tourner. La position du crochet de verrouillage est déterminée grâce à ses ressorts de maintien. Le crochet de verrouillage comprend son doigt 43 en position saillante au-dessus de la cornière pour collaborer avec le support d'un autre système de séquencement. La position du crochet de verrouillage est commandée par la came en crochet qui présente ses surfaces de commande 62 en appui sur les galets 64. La came en crochet comprend par ailleurs ses crochets 54 saillant sous la cornière. La rotation du crochet est empêchée par la surface 62 de commande de la came dans cette position où cette surface 62 s'étend selon un rayon constant autour de l'axe de rotation de la came. Ainsi les galets 64 reliés au crochet de verrouillage exercent un effort passant par le centre de rotation de la came, qui bloque le crochet en rotation.

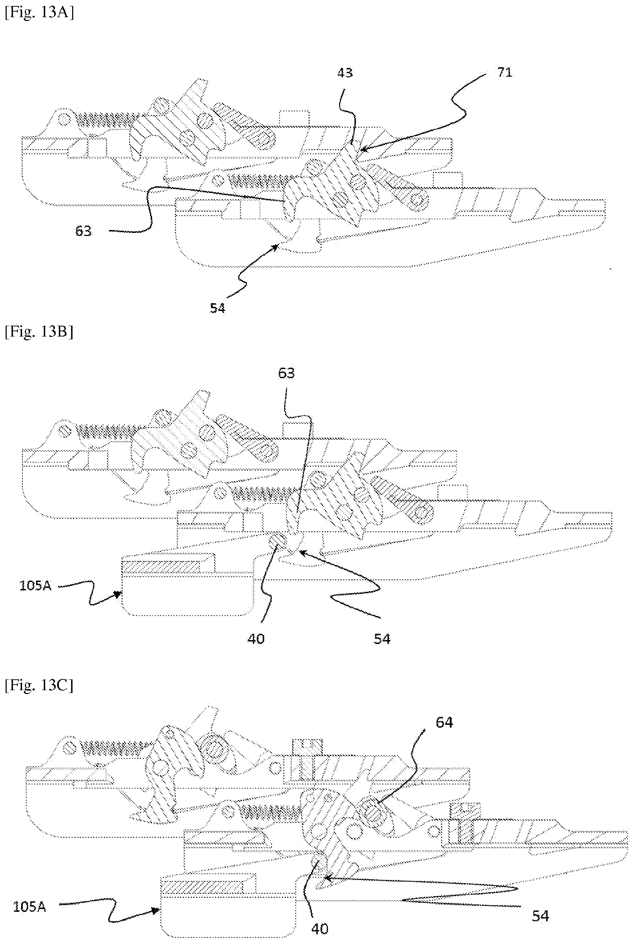

La figure 13A représente une vue en coupe de la configuration du système de synchronisation, dans le premier mode de réalisation des figures 8A à 8C, lors d'une première étape.

Les deux systèmes de séquencement sont maintenus fixement l'un par rapport à l'autre. Le doigt 43 d'un des systèmes de séquencement vient en appui sur une surface interne 71 du support de l'autre système de séquencement. Comme expliqué en relation avec la figure 12C, le crochet de verrouillage est bloqué en position par la came. Le crochet 54 de la came est saillant sous la cornière tandis que la portion 63 en crochet du crochet de verrouillage est relevée.

La figure 13B représente une vue en coupe de la configuration du système de synchronisation, dans le premier mode de réalisation, lors d'une seconde étape.

La portion 63 en crochet du crochet de verrouillage relevée permet de laisser passer la tige d'accrochage 40. Le crochet 54 de la came saillant sous la cornière est disposé à la hauteur de la tige d'accrochage 40.

La figure 13C représente une vue en coupe de la configuration du système de synchronisation, dans le premier mode de réalisation, lors d'une troisième étape.

La tige d'accrochage 40 pousse le crochet 54 de la came qui tourne alors autour de son axe, à l'encontre de la force de retenue de son ressort. Le galet 64 relié au crochet de verrouillage reste immobile, en appui sur la surface de rayon constant de la came.

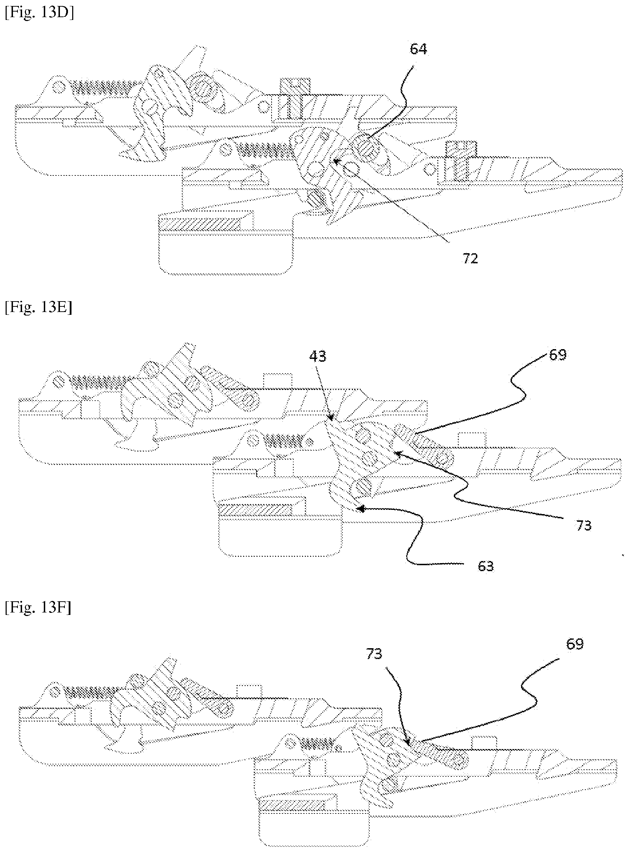

La figure 13D représente une vue en coupe de la configuration du système de synchronisation, dans le premier mode de réalisation, lors d'une quatrième étape.

Le système est positionné juste avant le basculement du crochet de verrouillage. Le galet 64 est disposé en fin de la surface de rayon constant et au bord d'une portion 72 en retrait de la came.

La figure 13E représente une vue en coupe de la configuration du système de synchronisation, dans le premier mode de réalisation, lors d'une cinquième étape.

Le crochet n'étant plus bloqué en rotation, celui-ci bascule pour avoir sa portion en crochet 63 venant bloquer la tige d'accrochage 40. La tige d'accrochage est ainsi bloquée, dans son mouvement de translation longitudinale, par le crochet de verrouillage et par la came. Par ailleurs le doigt 43 du crochet de verrouillage se dégage du support de l'autre système de séquencement. Il en résulte la désolidarisation des deux segments. Le système de séquencement est positionné juste avant le basculement du loquet 69 dans le logement 73 de blocage du loquet.

La figure 13F représente une vue en coupe de la configuration du système de synchronisation, dans le premier mode de réalisation, lors d'une sixième étape.

Le loquet 69 a basculé dans le logement 73 prévu dans le crochet de verrouillage. Le crochet de verrouillage est ainsi immobilisé contre le loquet 69 et contre la tige d'accrochage. La came est également immobilisée contre le support et en appui contre la tige d'accrochage. Il en résulte la solidarisation des deux segments.

Avantageusement, l'utilisation d'éléments exclusivement mobiles en rotation, pour le système de synchronisation, permet de garantir une bonne fiabilité lors du déploiement. Les mouvements en rotation permettent une plus grande fiabilité et répétabilité que des pièces glissant les unes contre les autres en translation, par exemple.

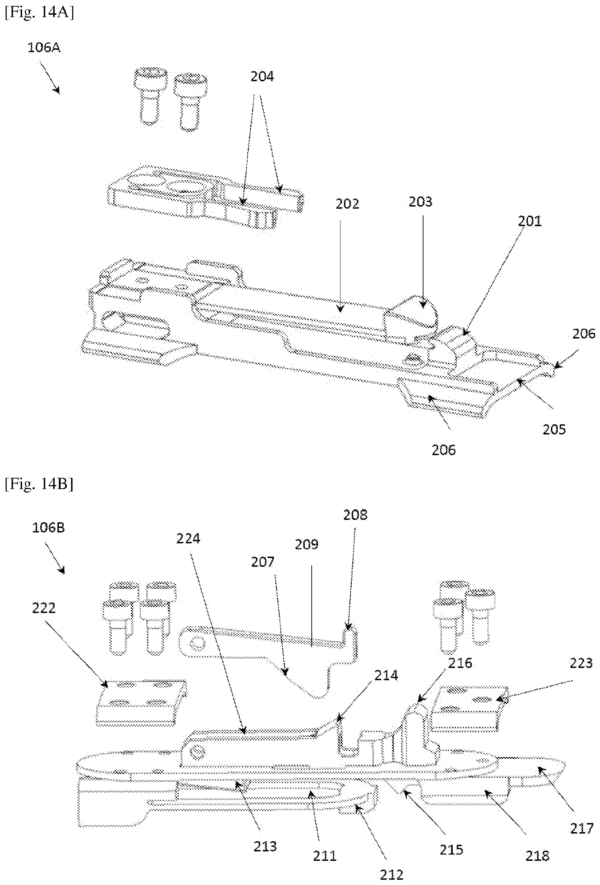

La figure 14A représente une vue éclatée d'un système d'engagement, dans un second mode de réalisation.

Le système d'engagement 106A comporte un support comprenant une portion centrale 205 fixée sur la portion centrale de la cornière et des ailes 206 fixées sur les ailes de la cornière. Le système d'engagement 106A comporte une butée fixe 201 solidaire de son support et disposée en avant d'une butée mobile 203. La butée mobile 203 est disposée à l'extrémité d'une lame 202 souple reliée à son autre extrémité au support du système d'engagement. La butée mobile 203 peut ainsi se rapprocher élastiquement de la cornière sur laquelle le support est fixé. La lame souple 202 s'étend parallèlement à la portion centrale de la cornière. Deux languettes 204 souples s'étendant longitudinalement au niveau des bords latéraux de la lame 202 souple et au-dessus de la lame souple, pour réaliser un guidage par rapport au système de séquencement. La butée mobile 203 présente par ailleurs une face avant arrondie facilitant également un guidage par rapport au système de séquencement.

La figure 14B représente une vue éclatée d'un système séquencement, dans le second mode de réalisation, associé au système d'engagement de la figure 10A.

Le système de séquencement 106B comprend une portion centrale 217 fixée à la portion centrale de la cornière et des ailes 218 fixées aux ailes de la cornière. Des plaquettes 222 et 223 sont vissées au support pour maintenir la cornière serrée entre les plaquettes et le support.

Le système de séquencement comprend une butée fixe anti-retour 213 solidaire du support et coopérant avec la butée mobile 203 du système d'engagement. Cette butée fixe 213 se présente sous la forme d'une rampe s'étendant vers l'intérieur du segment et disposée en vis-à-vis d'un passage 211. Ce passage 211 est réalisé entre les bras souples d'une butée mobile 212 du système de séquencement. Ces bras souples sont fixés d'une part au support et se rejoignent d'autre part au niveau de la butée mobile 212.

Le système de séquencement comprend en outre une butée fixe 214 retenant une butée mobile 212 d'un autre système de séquencement. Cette butée fixe 214, qui vient en saillie au-dessus de la cornière, est placée en vis-à-vis du passage 211 et au niveau d'un espace de débattement d'un loquet 209. Le loquet 209 positionné contre cette butée 214 présente alors sa broche 208 de dégagement remontant le long de la butée 214. Ainsi la butée mobile 212 de l'autre système de séquencement pourra être dégagée par la broche 208 du loquet pivotant 209, ce loquet 209 étant actionné par la butée fixe 201 du système d'engagement. Le loquet 209 comprend ainsi une broche de dégagement 208 et une rampe de commande 207. Cette rampe de commande 207 est destinée à rencontrer la butée fixe 201 du système d'engagement. La rampe 207 du loquet ainsi que la butée fixe 201 et la butée mobile 203 du système d'engagement viennent ainsi dans le passage 211 aménagé entre les bras portant la butée mobile 212 du système de séquencement. La broche de dégagement 208 du loquet 209 est destinée à agir sur la butée mobile 212 de l'autre système de séquencement. Un jour est par ailleurs pratiqué dans la cornière notamment pour permettre le débattement du loquet 209.

Le support comprend également des butées de calage 215 et 216. La butée de calage inférieure 215 est destinée à coopérer avec la butée de calage supérieure 216 d'un autre système d'engagement dans une position repliée des segments. Ces butées de calage permettent notamment de maintenir les segments plaqués les uns contre les autres par exemple par le système de gerbage mis en place lors du transport.

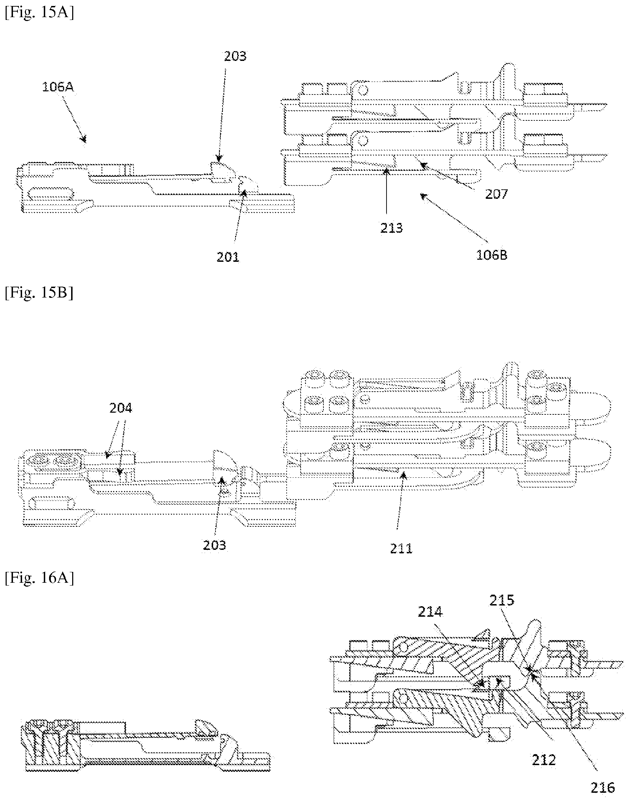

La figure 15A représente une vue de côté des éléments du système de synchronisation, dans le second mode de réalisation.

La butée mobile 203 du système d'engagement est disposée à une hauteur telle qu'elle viendra coopérer avec la butée fixe anti-retour 213 du système de séquencement 106B. En fin de course, la butée mobile rencontrera la rampe 207 bien que le loquet ait été préalablement remonté par la butée fixe. La butée fixe 201 du système d'engagement 106A est disposée à une hauteur pour passer à distance de la butée anti-retour 213 et pour venir rencontrer la rampe 207 du loquet. La butée fixe 201 est disposée en avant de la butée mobile 203 dans le système d'engagement. La butée anti-retour 213 est disposée en arrière de la rampe 207, dans le système de séquencement. L'écart, pris selon la direction longitudinale, entre la butée fixe 201 et la butée mobile 203 du système d'engagement est moindre que l'écart entre la butée anti-retour 213 et la rampe 207 du système de séquencement. Ainsi on assure d'abord un verrouillage anti-retour puis un déverrouillage des systèmes de séquencement.

La figure 15B représente une vue en perspective des éléments du système de synchronisation, dans le second mode de réalisation.

Le système d'engagement et le système de séquencement sont guidés l'un par rapport à l'autre pour une meilleure fiabilité. Le système d'engagement comprend des languettes latérales 204 venant en appui contre le système de séquencement. Le système de séquencement comprend par ailleurs son passage longitudinal 211 recevant la butée flexible 203 et la butée fixe du système d'engagement. La rampe anti-retour, le loquet et la butée fixe du système de séquencement viennent avantageusement en vis-à-vis de ce passage, pour assurer la fiabilité des interactions.

La figure 16A représente une vue en coupe de la configuration du système de synchronisation, dans le second mode de réalisation, lors d'une première étape.

Les deux systèmes de séquencement sont solidarisés entre eux d'une part via l'appui des butées de calage inférieure 215 et supérieure 216 et d'autre part via la butée mobile 212 du système de séquencement retenue par la butée fixe 214 de l'autre système de séquencement. Cette butée fixe 214 est disposée en vis-à-vis du passage formé par les bras de la butée mobile 212. Cette butée fixe 214 est aussi disposée en vis-à-vis du loquet maintenu en position abaissée contre le support et en appui sur la butée mobile.

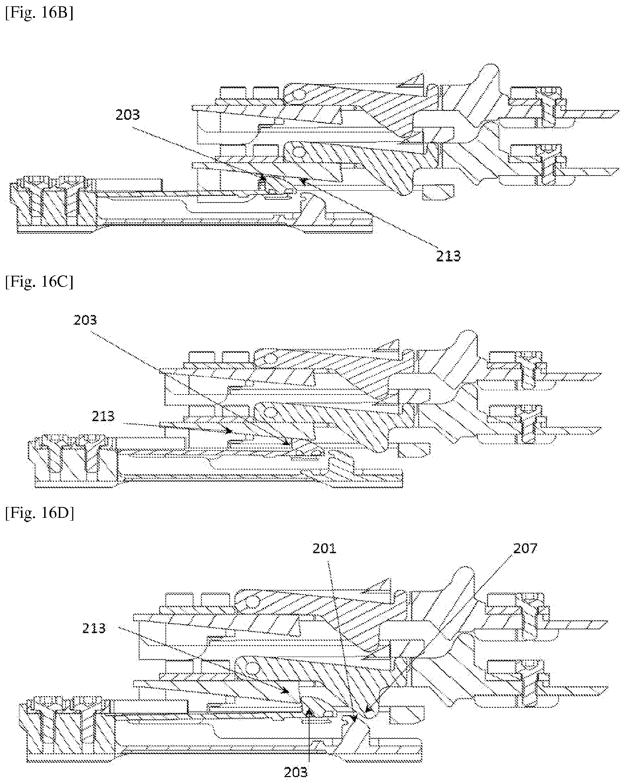

La figure 16B représente une vue en coupe de la configuration du système de synchronisation, dans le second mode de réalisation, lors d'une seconde étape.

Le système d'engagement s'est rapproché et sa butée mobile 203 n'est pas encore déformée, juste avant son contact avec la rampe de la butée anti-retour 213.

La figure 16C représente une vue en coupe de la configuration du système de synchronisation, dans le second mode de réalisation, lors d'une troisième étape.

Le système d'engagement a encore avancé, sa butée 203 mobile étant poussée par la rampe de la butée anti-retour 213.

La figure 16D représente une vue en coupe de la configuration du système de synchronisation, dans le second mode de réalisation, lors d'une quatrième étape.

Le système d'engagement a encore avancé, sa butée 203 mobile ayant passé la butée anti-retour 213 qui empêche maintenant un mouvement de recul. Le système d'engagement est ainsi maintenu en position par rapport au système de séquencement. La butée fixe 201 est positionnée juste avant son contact avec la rampe 207 du loquet.

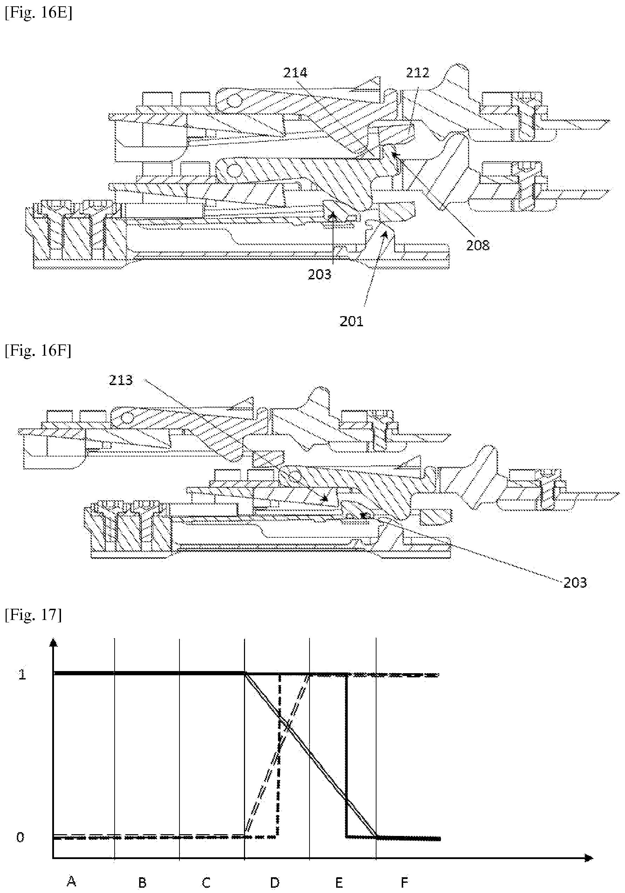

La figure 16E représente une vue en coupe de la configuration du système de synchronisation, dans le second mode de réalisation, lors d'une cinquième étape.

Les systèmes de séquencement sont ici désolidarisés. La butée fixe 201 a repoussé le loquet dont la broche 208 a dégagé la butée mobile de l'autre système de séquencement. Le loquet se trouve en appui contre la butée saillante 214. Le système d'engagement se trouve maintenant avec sa butée fixe 201 en appui contre la butée mobile du système de séquencement et avec sa butée mobile 201 en appui sur la rampe du système de séquencement. Cela permet avantageusement de limiter la course du segment indexeur inférieur.

La figure 16F représente une vue en coupe de la configuration du système de synchronisation, dans le second mode de réalisation, lors d'une sixième étape.

Une tension est exercée en bout de mât lors du déploiement. Cette tension exercée en bout de mât a ramené la butée mobile 203 du système d'engagement contre la butée anti-retour 213 du système de séquencement. On prévoit par exemple des surfaces d'appui coniques pour éviter tout glissement de ces butées l'une sur l'autre. Le système d'engagement est ainsi solidarisé au système de séquencement.

La figure 17 représente schématiquement les états des systèmes de synchronisation, d'une part entre les segments 101_i+1 et 101_i, et d'autre part entre les segments 101_i et 101_i+1, en comparant les premier et second modes de réalisation.

Le segment intérieur se déplace longitudinalement lors des phases successives notées A, B, C, D, E et F. Le système de synchronisation réalise d'une part la solidarisation, indiquée en traits pointillés, entre un système d'engagement et un système de séquencement et d'autre part la désolidarisation, indiquée en traits continus, entre deux systèmes de séquencement.

Dans le premier mode, indiqué en traits doubles, la solidarisation du système d'engagement et du système de séquencement est réalisée de façon progressive au court de la phase D, tandis que la désolidarisation entre les deux systèmes de séquencement est également réalisée de façon progressive de la phase D à la phase E.

Dans le second mode de réalisation, indiqué en trait simple, la solidarisation du système d'engagement et un système de séquencement est réalisée brusquement à la phase D puis s'opère, également brusquement, la désolidarisation entre les deux systèmes de séquencement à la phase E.

## Revendications

1. Mât télescopique (100) comprenant :
- des segments (101_1, 101_i, 101_N) coaxiaux pouvant être commandés d'une position repliée en une position déployée,
- un ensemble de systèmes de guidage (104, 104P) disposés entre les segments (101) adjacents,
- un ensemble de systèmes de synchronisation (105A, 105B ; 106A, 106B) des segments (101) lors du déploiement et
- un système d'entraînement (107) des segments de la position repliée vers la position déployée,
et dans lequel chaque segment (101) est composé d'un même nombre déterminé de cornières (102) solidarisées entre elles et s'étendant selon toute la longueur dudit segment (101), ledit nombre de cornières (102) étant d'au moins trois, chaque segment (101) présentant une section transversale formant un polygone dont les cornières (102) occupent les sommets, chaque cornière (102) comprenant une partie centrale plane (20) bordée par deux ailes latérales (21), les cornières de deux segments adjacents venant en vis-à-vis l'une de l'autre, chaque système de guidage (104, 104P) disposé entre deux segments adjacents étant fixé sur une des cornières d'un desdits deux segments adjacents et comprenant des galets (22) roulant sur la portion centrale (20) de la cornière en vis-à-vis appartenant à l'autre desdits deux segments adjacents,
**caractérisé en ce que** le système de synchronisation comporte des systèmes d'engagement (105A, 106A) et des systèmes de séquencement (105B, 106B) chacun positionnés sur une cornière de façon à assurer un nouvel entrainement d'un des segments puis une libération de ce segment précédemment immobilisé, chaque segment situé entre le segment fixe (101_1) et le segment d'extrémité (101_N), comprenant au moins un système d'engagement (105A, 106A) et un système de séquencement (105B, 106B) fixés sur une de ses cornières (102), le segment d'extrémité (101_N) portant un système d'engagement (105A, 106A) et le segment fixe (101_1) portant un système de séquencement (105B, 106B), le système d'engagement (105A, 106A) d'un premier segment (101_i+1) coopérant avec le système de séquencement fixé sur la cornière en vis-à-vis d'un deuxième segment (101_i) adjacent, le système de séquencement du deuxième segment (101_i) coopérant avec le système de séquencement fixé sur la cornière en vis-à-vis d'un troisième segment (101_i-1) adjacent, l'avance de chaque segment (101) induisant au moins la solidarisation d'un des systèmes d'engagement (105A, 106A) avec un des systèmes de séquencement (105B, 106B) et induisant au moins la désolidarisation de deux des systèmes de séquencement (105B, 106B).

2. Mât télescopique (100) selon la revendication 1, **caractérisé en ce que**, dans chaque segment (101), les cornières comprennent chacune un profil à trois pans en fibres tissées formant la partie centrale (20) et les ailes (21), les ailes voisines, d'une cornière à l'autre, étant disposées dans un même plan, les cornières étant solidarisées entre elles par des éléments de solidarisation (103) en fibres plaqués sur les profils à trois pans, les cornières et les éléments de solidarisation étant réalisés d'une seule pièce, par durcissement des fibres.

3. Mât télescopique (100) selon la revendication précédente, **caractérisé en ce que** les cornières sont solidarisées entre elles par au moins deux bobinages (103) par cornières, lesdits deux bobinages (103) s'enroulant respectivement en sens horaire et en sens antihoraire autour des cornières (102) et démarrant en deux extrémités opposées de chaque cornière, lesdits deux bobinages s'étendant sur toute la longueur du segment (101), les plis des bobinages multi-plis étant entrelacés au niveau de points de jonction (28) des bobinages.

4. Mât télescopique (100) selon l'une quelconque des revendications précédentes, **caractérisé en ce que** le nombre de cornières (102) par segment étant égal à trois, chaque système de guidage, entre deux segments (101) adjacents, comprend deux paires de palonniers rigides (104) portant chacun deux galets (22) mobiles en rotation et une paire de palonniers flexibles (104P) portant chacun deux galets (22) mobiles en rotation, chaque paire de palonniers (104, 104P) étant disposée entre deux cornières (102) venant en vis-à-vis, les paires de palonniers (104, 104P) étant fixées à une des extrémités du segment (101) dans une zone correspondant à un recouvrement (4a, 4b) des segments adjacents en position déployée.

5. Mat télescopique selon l'une quelconque des revendications précédentes, **caractérisé en ce que** chaque système d'engagement comprend une tige externe d'accrochage (40) solidarisée à ladite cornière (102) du premier segment (101_i+1), la tige d'accrochage (40) entraînant une came en crochet (41) du système de séquencement du deuxième segment (101_i), la came en crochet (41) étant mobile en rotation par rapport à ladite cornière du deuxième segment (101_i) jusqu'à une position de butée et de blocage latérale de la tige d'accrochage (40), la came en crochet (41) commandant la position d'un verrou en crochet (42) mobile en rotation par rapport à ladite cornière du deuxième segment (101_i) jusqu'à une position verrouillée où le verrou en crochet (42) réalise un blocage latéral complémentaire de la tige d'accrochage (40), le verrou en crochet (42) comprenant par ailleurs un doigt (43) de blocage du système de séquencement dudit troisième segment (101_i-1), ce doigt (43) se dégageant pour libérer le système de séquencement du troisième segment (101_i-1) dans la position verrouillée.

6. Mât télescopique (100) selon l'une quelconque des revendications 1 à 4, **caractérisé en ce que** le système d'engagement (106A) du premier segment (101_i+1) comporte une butée fixe (201) et une butée mobile (203), le système de séquencement du deuxième segment comprenant une butée fixe anti-retour (213) coopérant avec la butée mobile (203) du système d'engagement, le système de séquencement du deuxième segment comprenant une butée fixe (214) retenant une butée mobile (212) du système de séquencement du troisième segment, le système de sé-quencement du deuxième segment comprenant un loquet (209) pivotant dont une rampe (207) est actionnée par la butée fixe (201) du système d'engagement du premier segment pour dégager la butée mobile (212) du système de séquencement du troisième segment, la rampe (207) du loquet ainsi que la butée fixe (201) et la butée mobile (203) étant agencés pour venir dans un passage (211) aménagé entre des bras flexibles portant la butée mobile (212) du système de séquencement du deuxième segment.

7. Mât télescopique (100) selon l'une quelconque des revendications précédentes, **caractérisé en ce que** le mât comporte des bras (25) et des poutres (26) et **en ce que** le système d'entraînement (107) comporte une tige filetée (23) commandée en rotation et coopérant successivement avec des écrous (24) reliés aux bases des segments (101), à l'exception du segment externe (101_1) fixe, chaque écrou (24) étant maintenu avec un jeu longitudinal dans un support périphérique (75) relié par ailleurs à les bras (25), lesdits bras étant déformables et disposés dans un plan radial de l'écrou (24), ces bras étant fixés par ailleurs à les poutres (26) solidaires des cornières (102).

8. Mât télescopique (100) selon la revendication précédente, **caractérisé en ce que** les bras (25) déformables, en position non déformée, viennent en appui sur des cales (27) disposées parallèlement au plan radial de l'écrou (24) pour empêcher une translation de l'écrou (24) vers la base du mât (100) et autoriser une translation de l'écrou (24) vers l'extrémité distale du segment (101).

## Patentansprüche

1. Teleskopmast (100), der Folgendes umfasst:
- koaxiale Segmente (101_1, 101_i, 101_N), die von einer eingeklappten Position in eine ausgeklappte Position gesteuert werden können,
- eine Reihe von Führungssystemen (104, 104P), die zwischen benachbarten Segmenten (101) angeordnet sind,
- eine Reihe von Synchronisierungssystemen (105A, 105B; 106A, 106B) der Segmente (101) während des Ausklappens, und
- ein Antriebssystem (107) für die Segmente von der eingeklappten Position in die ausgeklappte Position,
und wobei jedes Segment (101) aus einer gleichen bestimmten Anzahl an Winkelprofilen (102) besteht, die aneinander befestigt sind und sich über die gesamte Länge des Segments (101) erstrecken, wobei die Anzahl an Winkelprofilen (102) mindestens drei beträgt, wobei jedes Segment (101) einen Querschnitt aufweist, der ein Polygon bildet, dessen Winkelprofile (102) die Scheitelpunkte einnehmen, wobei jedes Winkelprofil (102) einen flachen Mittelabschnitt (20) umfasst, der von zwei Seitenflügeln (21) begrenzt wird, wobei die Winkelprofile zweier benachbarter Segmente einander zugewandt sind, wobei jedes Führungssystem (104, 104P), das zwischen zwei benachbarten Segmenten angeordnet ist, an einem der Winkelprofile eines der beiden benachbarten Segmente fixiert ist und Rollen (22) aufweist, die auf dem Mittelabschnitt (20) des gegenüberliegenden Winkelprofils abrollen, das zum anderen der beiden benachbarten Segmente gehört,
**dadurch gekennzeichnet, dass** das Synchronisierungssystem Eingriffssysteme (105A, 106A) und Sequenzierungssysteme (105B, 106B) umfasst, die jeweils auf einem Winkelprofil positioniert sind, um einen erneuten Antrieb eines der Segmente und dann jeweils eine Freigabe dieses zuvor immobilisierten Segments sicherzustellen, wobei jedes Segment, das sich zwischen dem festen Segment (101_1) und dem Endsegment (101_N) befindet, mindestens ein Eingriffssystem (105A, 106A) und ein Sequenzierungssystem (105B, 106B) umfasst, die an einem seiner Winkelprofile (102) fixiert sind wobei das Endsegment (101_N) ein Eingriffssystem (105A, 106A) trägt und das feste Segment (101_1) ein Sequenzierungssystem (105B, 106B) trägt, wobei das Eingriffssystem (105A, 106A) eines ersten Segments (101_i+1) mit dem Sequenzierungssystem zusammenwirkt, das auf dem einem benachbarten zweiten Segment (101_i) zugewandten Winkelprofil fixiert ist, wobei das Sequenzierungssystem des zweiten Segments (101_i) mit dem Sequenzierungssystem zusammenwirkt, das auf dem einem benachbarten dritten Segment (101_i-1) zugewandten Winkelprofil fixiert ist, wobei der Vorschub jedes Segments (101) mindestens das Befestigen eines der Eingriffssysteme (105A, 106A) an einem der Sequenzierungssysteme (105B, 106B) herbeiführt und mindestens das Trennen von zwei der Sequenzierungssysteme (105B, 106B) herbeiführt.

2. Teleskopmast (100) nach Anspruch 1, **dadurch gekennzeichnet, dass** in jedem Segment (101) jedes der Winkelprofile ein dreiseitiges Profil aus gewebten Fasern aufweist, das den Mittelabschnitt (20) und die Flügel (21) bildet, wobei die benachbarten Flügel von einem Winkelprofil zum anderen in derselben Ebene angeordnet sind, wobei die Winkelprofile durch an die dreiseitigen Profile angepresste Befestigungselemente (103) aus Fasern aneinander befestigt sind, wobei die Winkelprofile und die Befestigungselemente einstückig durch Aushärten der Fasern hergestellt werden.

3. Teleskopmast (100) nach dem vorhergehenden Anspruch, **dadurch gekennzeichnet, dass** die Winkelprofile durch mindestens zwei Wicklungen (103) pro Winkelprofil miteinander verbunden sind, wobei die beiden Wicklungen (103) jeweils im Uhrzeigersinn und gegen den Uhrzeigersinn um die Winkelprofile (102) beginnend an zwei gegenüberliegenden Enden jedes Winkelprofils gewickelt sind, wobei sich die beiden Wicklungen über die gesamte Länge des Segments (101) erstrecken, wobei die Lagen der mehrlagigen Wicklungen an Knotenpunkten (28) der Wicklungen miteinander verflochten sind.

4. Teleskopmast (100) nach einem der vorhergehenden Ansprüche, **dadurch gekennzeichnet, dass** die Anzahl an Winkelprofilen (102) pro Segment gleich drei ist, wobei jedes Führungssystem zwischen zwei benachbarten Segmenten (101) zwei Paare starrer Spreizer (104), die jeweils zwei drehbewegliche Rollen (22) tragen, und ein Paar flexibler Spreizer (104P) aufweist, die jeweils zwei drehbewegliche Rollen (22) tragen, wobei jedes Paar Spreizer (104, 104P) zwischen zwei Winkelprofilen (102) einander zugewandt angeordnet ist, wobei die Paare Spreizer (104, 104P) an einem der Enden des Segments (101) in einem Bereich fixiert sind, der einer Überlappung (4a, 4b) der benachbarten Segmente in der ausgeklappten Position entspricht.

5. Teleskopmast nach einem der vorhergehenden Ansprüche, **dadurch gekennzeichnet, dass** jedes Eingriffssystem eine äußere Hakenstange (40) umfasst, die an dem Winkelprofil (102) des ersten Segments (101_i+1) befestigt ist, wobei die Hakenstange (40) einen Hakennocken (41) des Sequenzierungssystems des zweiten Segments (101_i) antreibt, wobei der Hakennocken (41) im Verhältnis zum Winkelprofil des zweiten Segments (101_i) bis zu einer Anlage- und seitlichen Blockierposition der Hakenstange (40) drehbeweglich ist, wobei der Hakennocken (41) die Position einer Hakenverriegelung (42) steuert, die im Verhältnis zum Winkelprofil des zweiten Segments (101_i) bis zu einer verriegelten Position drehbeweglich ist, in der die Hakenverriegelung (42) eine komplementäre seitliche Blockierung der Hakenstange (40) durchführt, wobei die Hakenverriegelung (42) für das Sequenzierungssystem des dritten Segments (101_i-1) aufweist, wobei sich dieser Finger (43) löst, um das Sequenzierungssystem des dritten Segments (101_i-1) in der verriegelten Position freizugeben.

6. Teleskopmast (100) nach einem der Ansprüche 1 bis 4, **dadurch gekennzeichnet, dass** das Eingriffssystem (106A) des ersten Segments (101_i+1) einen festen Anschlag (201) und einen beweglichen Anschlag (203) umfasst, wobei das Sequenzierungssystem des zweiten Segments einen festen Rücklaufsperranschlag (213) aufweist, der mit dem beweglichen Anschlag (203) des Eingriffssystems zusammenwirkt, wobei das Sequenzierungssystem des zweiten Segments einen festen Anschlag (214) aufweist, der einen beweglichen Anschlag (212) des Sequenzierungssystems des dritten Segments hält, wobei das Sequenzierungssystem des zweiten Segments eine schwenkbare Sperrklinke (209) aufweist, deren Rampe (207) durch den festen Anschlag (201) des Eingriffssystems des ersten Segments betätigt wird, um den beweglichen Anschlag (212) des Sequenzierungssystem des dritten Segments zu lösen, wobei die Rampe (207) der Sperrklinke sowie der feste Anschlag (201) und der bewegliche Anschlag (203) so angeordnet sind, dass sie in einen Durchgang (211) passen, der zwischen flexiblen Armen vorgesehen ist, die den beweglichen Anschlag (212) des Sequenzierungssystems des zweiten Segments tragen.

7. Teleskopmast (100) nach einem der vorhergehenden Ansprüche, **dadurch gekennzeichnet, dass** der Mast Arme (25) und Träger (26) umfasst, und dadurch, dass das Antriebssystem (107) eine Gewindestange (23) umfasst, deren Drehung gesteuert wird und die nacheinander mit Muttern (24) zusammenwirkt, die mit den Basen der Segmente (101) verbunden sind, mit Ausnahme des festen Außensegments (101_1), wobei jede Mutter (24) mit einem Längsspiel in einer Umfangshalterung (75) gehalten wird, die ferner mit den Armen (25) verbunden ist, wobei die Arme verformbar und in einer Radialebene der Mutter (24) angeordnet sind, wobei diese Arme ferner an den Trägern (26) fixiert sind, die an den Winkelprofilen (102) befestigt sind.

8. Teleskopmast (100) nach dem vorhergehenden Anspruch, **dadurch gekennzeichnet, dass** die verformbaren Arme (25) in unverformter Position auf Keilen (27) zum Anliegen kommen, die parallel zur Radialebene der Mutter (24) angeordnet sind, um eine Verschiebung der Mutter (24) in Richtung der Basis des Masts (100) zu verhindern und eine Verschiebung der Mutter (24) in Richtung des distalen Endes des Segments (101) zu gestatten.

## Claims

1. Telescopic mast (100) comprising:
- coaxial segments (101_1, 101_i, 101_N) which can be controlled from a stowed position to a deployed position,
- a set of guide systems (104, 104P) arranged between the adjacent segments (101),
- a set of systems (105A, 105B; 106A, 106B) for synchronising the segments (101) during deployment, and
- a system (107) for driving the segments from the stowed position to the deployed position,
and wherein each segment (101) is composed of the same determined number of angle sections (102) secured together and extending over the entire length of said segment (101), said number of angle sections (102) being at least three, each segment (101) having a cross-section forming a polygon whose angle sections (102) occupy the vertices, each angle section (102) comprising a flat central portion (20) bordered by two side wings (21), the angle sections of two adjacent segments facing one another, each guide system (104, 104P) arranged between two adjacent segments being attached to one of the angle sections of one of said two adjacent segments and comprising rollers (22) that roll on the central portion (20) of the opposite angle section belonging to the other one of said two adjacent segments,
**characterised in that** the synchronisation system includes engagement systems (105A, 106A) and sequencing systems (105B, 106B) each positioned on an angle section so as to ensure a new drive of one of the segments then a release of this previously immobilized segment, each segment located between the fixed segment (101_1) and the end segment (101_N), comprising at least one engagement system (105A, 106A) and a sequencing system (105B, 106B) attached on one of its angle sections (102), the end segment (101_N) carrying an engagement system (105A, 106A) and the fixed segment (101_1) carrying a sequencing system (105B, 106B), the engagement system (105A, 106A) of a first segment (101_i+1) cooperating with the sequencing system attached on the angle section facing an adjacent second segment (101_i), the sequencing system of the second segment (101_i) cooperating with the sequencing system attached on the angle section facing an adjacent third segment (101_i-1), the advance of each segment (101) inducing at least securing of one of the engagement systems (105A, 106A) with one of the sequencing systems (105B, 106B) and inducing at least the separation of two of the sequencing systems (105B, 106B).

2. Telescopic mast (100) according to claim 1, **characterised in that**, in each segment (101), each of the angle sections comprises a three-sided profile made of woven fibres forming the central portion (20) and the wings (21), the neighbouring wings, from one angle section to another, being disposed in the same plane, the angle sections being secured together by securing elements (103) made of fibres pressed on the three-sided profiles, the angle sections and the securing elements being made in one piece, by hardening of the fibres.

3. Telescopic mast (100) according to the preceding claim, **characterised in that** the angle sections are secured together by at least two windings (103) per angle section, said two windings (103) being wound respectively clockwise and counterclockwise around the angle sections (102) and starting at two opposite ends of each angle section, said two windings extending over the entire length of the segment (101), the plies of the multi-ply windings being interwoven at junction points (28) of the windings.

4. Telescopic mast (100) according to any one of the preceding claims, **characterised in that** the number of angle sections (102) per segment being equal to three, each guide system, between two adjacent segments (101), comprises two pairs of rigid spreaders (104) each carrying two rollers (22) movable in rotation and a pair of flexible spreaders (104P) each carrying two rollers (22) movable in rotation, each pair of spreaders (104, 104P) being disposed between two angle sections (102) facing one another, the pairs of spreaders (104, 104P) being attached to one of the ends of the segment (101) in an area corresponding to an overlap (4a, 4b) of the adjacent segments in the deployed position.

5. Telescopic mast according to any one of the preceding claims, **characterised in that** each engagement system comprises an outer hooking rod (40) secured to said angle section (102) of the first segment (101_i+1), the hooking rod (40) driving a hook cam (41) of the sequencing system of the second segment (101_i), the hook cam (41) being movable in rotation relative to said angle section of the second segment (101_i) up to a position of abutment and lateral blocking of the hooking rod (40), the hook cam (41) controlling the position of a hook-like lock (42) movable in rotation relative to said angle section of the second segment (101_i) up to a locked position where the hook-like lock (42) performs a complementary lateral blocking of the hooking rod (40), the hook-like lock (42) comprising a finger (43) for blocking the sequencing system of said third segment (101_i-1), this finger (43) disengaging to release the sequencing system of the third segment (101_i-1) in the locked position.

6. Telescopic mast (100) according to any one of claims 1 to 4, **characterised in that** the engagement system (106A) of the first segment (101_i+1) comprises a fixed stop (201) and a movable stop (203), the sequencing system of the second segment comprising a fixed non-return stop (213) cooperating with the movable stop (203) of the engagement system, the sequencing system of the second segment comprising a fixed stop (214) holding a movable stop (212) of the sequencing system of the third segment, the sequencing system of the second segment comprising a pivotable pawl (209) a ramp (207) of which is actuated by the fixed stop (201) of the engagement system of the first segment to release the movable stop (212) of the sequencing system of the third segment, the ramp (207) of the pawl as well as the fixed stop (201) and the movable stop (203) being arranged so as to come into a passage (211) arranged between flexible arms carrying the movable stop (212) of the sequencing system of the second segment.

7. Telescopic mast (100) according to any one of the preceding claims, **characterised in that** the mast comprises arms (25) and beams (26) and **in that** the drive system (107) includes a threaded rod (23) controlled in rotation and cooperating successively with nuts (24) connected to the bases of the segments (101), with the exception of the fixed outer segment (101_1), each nut (24) being held with a longitudinal clearance in a peripheral support (75) also connected to the arms (25), said arms being deformable and arranged in a radial plane of the nut (24), these arms being also fastened to the beams (26) secured to the angle sections (102).

8. Telescopic mast (100) according to the preceding claim, **characterised in that** the deformable arms (25), in undeformed position, bear on wedges (27) arranged parallel to the radial plane of the nut (24) to prevent a translation of the nut (24) towards the base of the mast (100) and enable a translation of the nut (24) towards the distal end of the segment (101).
